# EUROPÄISCHE PATENTSCHRIFT

(11) **EP 1 149 528 B1**
(45) Veröffentlichungstag und Bekanntmachung des Hinweises auf die Patenterteilung: **11.06.2003**
(21) Anmeldenummer: 00109225.3
(22) Anmeldetag: 28.04.2000
(51) Int. Cl.: A01K 31/00, A01K 31/17

(54) **Vorrichtung zur Bereitstellung von Einstreu in einem ausgestalteten Käfig für die Haltung von Legehennen**
Device for supplying litter in cage configured for keeping laying hens
Dispositif pour fournir de la litière dans une cage configurée pour l'élevage des poules pondeuses

(43) Veröffentlichungstag der Anmeldung: 31.10.2001
(73) Patentinhaber: Ten Elsen GmbH & Co. KG, 74665 Sonsbeck (DE)
(72) Erfinder: Ten Elsen, Wilfried, 47665 Sonsbeck (DE)
(74) Vertreter: Meyer-Roedern, Giso, Dr.

(56) Entgegenhaltungen:
- EP-A- 0 970 607
- "La Batterie C3 Europa 2002" , FACCO POULTRY EQUIPMENT , IT XP002146178 * das ganze Dokument *

## Beschreibung

Die Erfindung betrifft eine Vorrichtung zur Bereitstellung von Einstreu in einem ausgestalteten Käfig für die Haltung von Legehennen.

Durch die im Amtsblatt der Europäischen Gemeinschaften vom 03. August 1999 veröffentlichte Richtlinie 99/74/EG der Europäischen Kommission werden Bestimmungen für die Haltung von Legehennen in ausgestalteten Käfigen getroffen. Unter anderem ist eine Einstreu vorgeschrieben, die den Legehennen das Picken und Scharren ermöglicht.

Die Druckschrift EP-A-970607 zeigt einen Käfig für Legehennen mit einem drehbar gelagerten Bodenteil, das wahlweise eine Beschickungs- und Nutzstellung oder eine Entleerungs- und Reinigungsstellung einnimmt.

Aufgabe der Erfindung ist es, eine für den automatischen Betrieb geeignete, selbstreinigende Vorrichtung zur Bereitstellung von Einstreu zu schaffen.

Die Vorrichtung gemäß dem Hauptanspruch löst diese Aufgabe.

In der Beschickungs- und Nutzstellung des Bodens wird Einstreu darauf aufgegeben. Das kann ohne weiteres maschinell unter automatischer Steuerung geschehen. Die Legehennen können den Boden betreten und in der Einstreu picken und scharren.

In der Entleerungs- und Reinigungsstellung fällt die Einstreu von dem Boden herab. Die Legehennen sorgen für eine gründliche Reinigung des Bodens, indem sie weiter daran picken und kratzen.

In der Entleerungs- und Reinigungsstellung können sich die Legehennen nicht auf dem Boden halten. Das entspricht dem Interesse des Betreibers, die Einstreu nur zeitweilig zur Verfügung zu stellen, beispielsweise nicht in der Phase der Eiablage, die nicht in der Einstreu erfolgen soll.

In beiden Stellungen ist der Boden zwischen den Seitenwänden aufgenommen. Er vollzieht auch seine Verstellbewegung zwischen den Seitenwänden. Dadurch ist ausgeschlossen, daß Legehennen beim Verstellen des Bodens zu Schaden kommen. Somit ist ein maschinelles Verstellen unter automatischer Steuerung möglich. Die Seitenwände begrenzen zugleich den Zugang zu der Einstreu.

Bei einer bevorzugten Ausführungsform ist der Boden an den Seitenwänden beweglich geführt oder gelagert.

Bei einer bevorzugten Ausführungsform ist der Boden ein an den Seitenwänden gelenkig angebrachter Klappboden. Die Beschickungs- und Nutzstellung ist eine Horizontalstellung, und die Entleerungs- und Reinigungsstellung eine Schrägstellung des Bodens zwischen den Seitenwänden.

Bei einer bevorzugten Ausführungsform ist die Bodenfläche geschlossen. Der Boden ist trogförmig.

Bei einer bevorzugten Ausführungsform sind die Seitenwände der Vorrichtung an einer Endwand des Käfigs oder Zwischenwand zwischen zwei Käfigen angebracht. Die Gelenkachse des Bodens befindet sich auf der der End- bzw. Trennwand abgewandten Seite des Bodens. Der Boden reicht nicht an die End- bzw. Trennwand heran, so daß ein Spalt zum Entweichen bleibt. Dieser Spalt ist mindestens so breit, daß die Legehennen ihren Hals zwischen dem Boden und der End- bzw. Trennwand herausziehen können.

Bei einer bevorzugten Ausführungsform sind die Seitenwände der Vorrichtung lichtdurchlässig. Die Seitenwände können beispielsweise aus Lochblech oder Drahtgeflecht bestehen. Dadurch tritt keine Verdunkelung ein, die die unerwünschte Eiablage in die Einstreu begünstigen würde.

Bei einer bevorzugten Ausführungsform bilden die Seitenwände eine Auflage für den Boden. Sie können dazu abgewinkelt sein.

Bei einer bevorzugten Ausführungsform ist die Verstellung des Bodens zug- oder schubmittelbetätigt. Insbesondere kommt ein Seilzug oder eine Zug- oder Schubstange für die Betätigung des Bodens in Betracht.

Bei einer bevorzugten Ausführungsform ist die Vorrichtung mit Abstand oberhalb des Käfigbodens angeordnet. Dadurch kann der Platz darunter als Aufenthaltsraum für die Legehennen genutzt werden. Auch ist sichergestellt, daß die Hennen bei Betätigung des Bodens nicht zu Schaden kommen, da sie nach unten ausweichen können.

Im Interesse der guten Zugänglichkeit der Einstreu ist bei einer bevorzugten Ausführungsform vor dem Boden der Vorrichtung eine Anflugstange fest montiert.

Bei einer bevorzugten Ausführungsform wird die Vorrichtung maschinell unter automatischer Steuerung mit Einstreu beschickt. Dazu dient vorzugsweise ein Schnecken- oder Spiralenförderer mit einer Dosieröffnung oberhalb des Bodens.

Die Erfindung wird im folgenden anhand eines in der Zeichnung dargestellten Ausführungsbeispiels näher erläutert. Es zeigen:
- Fig. 1: die Seitenansicht einer Gruppenlege-Anlage;

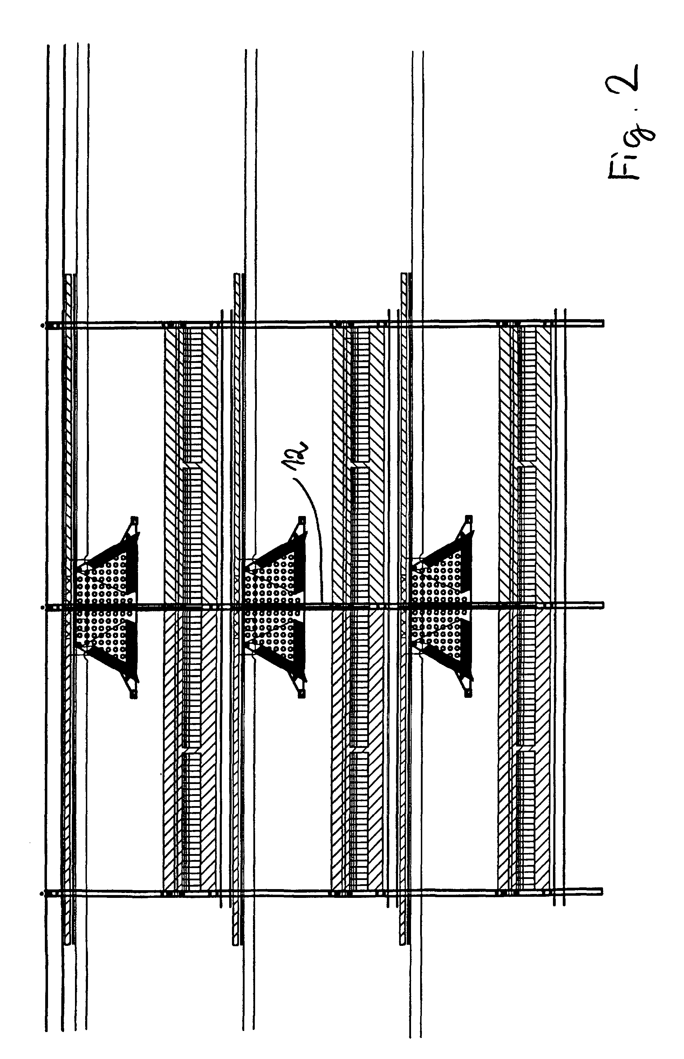

- Fig. 2: einen vergrößerten Ausschnitt von Fig. 1;
- Fig. 3: einen abermals vergrößerten Ausschnitt von Fig. 1 und Fig. 2; und
- Fig. 4: einen Querschnitt durch eine Etage der Gruppenlege-Anlage.

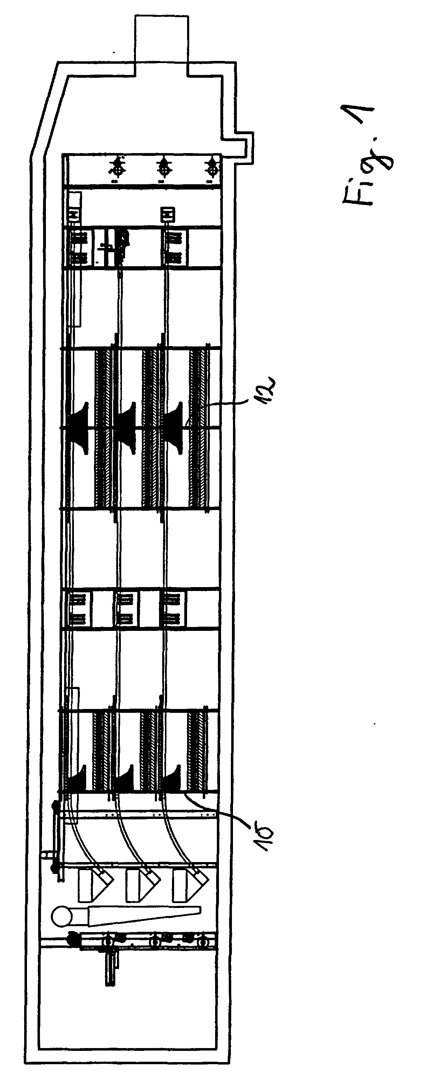

Die in Fig. 1 gezeigte Gruppenlege-Anlage hat mehrere nebeneinander und in Etagen übereinander angeordnete Käfige für Legehennen. In einem jeden Käfig befindet sich eine Vorrichtung zur Bereitstellung von Einstreu. Die Vorrichtungen sind teils an einer Endwand 10 der Käfige und teils spiegelbildlich an einer Trennwand 12 zwischen zwei Käfigen angebracht.

Die Vorrichtungen haben einen trogförmigen Boden 14, der zwischen einander gegenüberliegenden Seitenwänden 16 aufgenommen und gelenkig daran gelagert ist. Die Seitenwände 16 bestehen aus Lochblech. Sie sind am unteren Rand nach innen abgewinkelt, so daß sie eine Auflage für den Boden 14 bilden. Der Boden 14 nimmt auf dieser Auflage eine Horizontalstellung ein.

Die Anlenkachse 18 für den Boden 14 erstreckt sich quer zu den Seitenwänden 16. Sie befindet sich auf der der End- bzw. Trennwand 10, 12 abgewandten Seite am unteren Bodenrand.

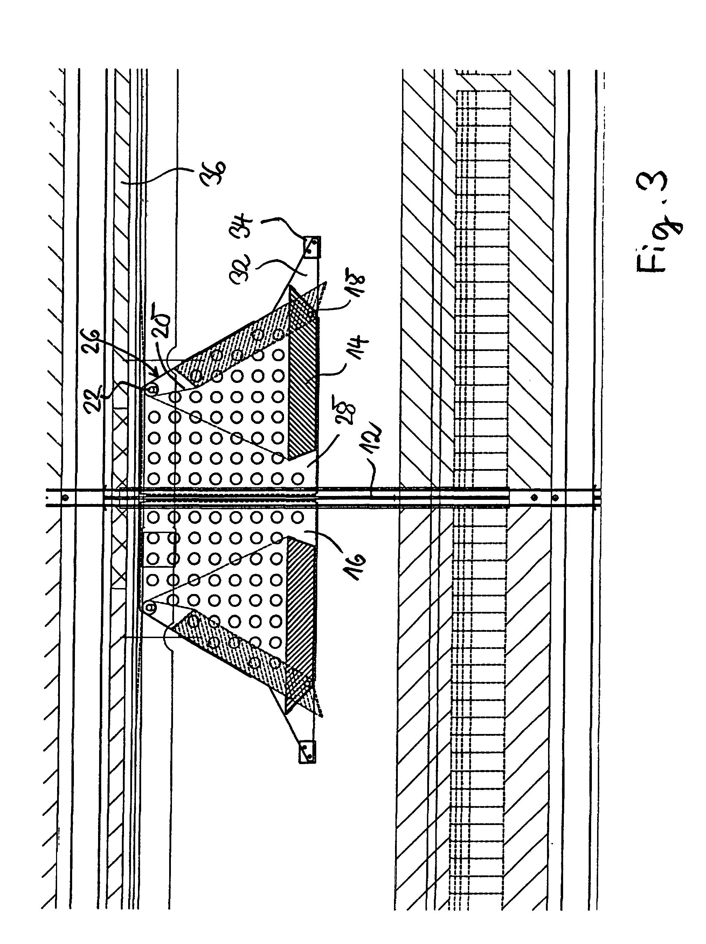

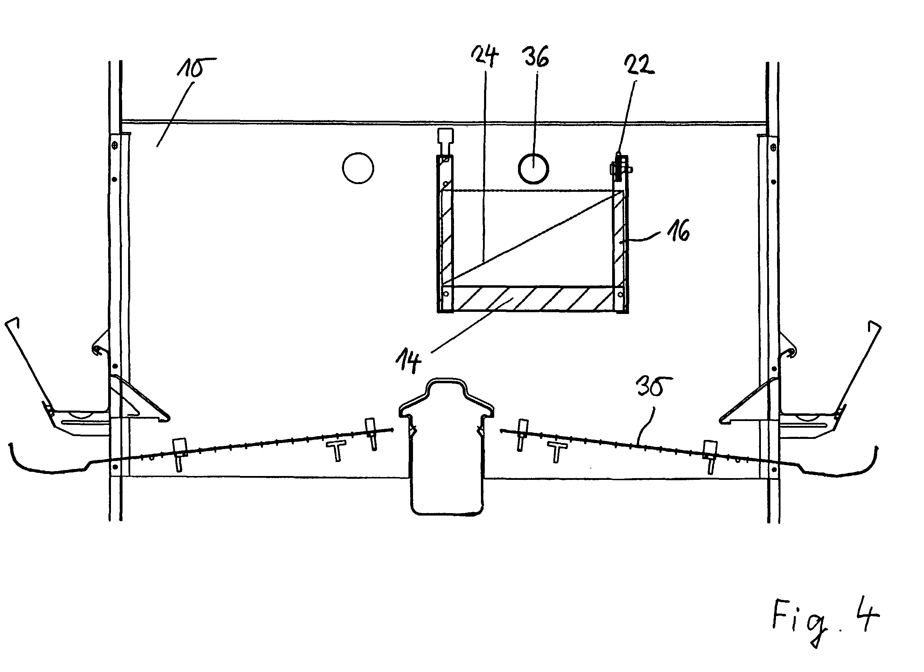

Auf der der End- bzw. Trennwand 10, 12 zugewandten Seite des Bodens 14 greift unten ein Zugseil 20 an. Das Zugseil 20 läuft über eine Rolle 22, die hoch über dem Boden 14 an einer der Seitenwände 16 gelagert ist. Durch Ziehen an dem Zugseil 20 wird der Boden 14 in eine Schrägstellung hochgeklappt, die in Fig. 3 mit gestrichelter Schraffur und in Fig. 4 mit einem Diagonalstrich 24 angedeutet ist. Bei Nachlassen des Zugseils 20 klappt der Boden 14 durch sein Eigengewicht in die Horizontalstellung zurück. Die Klappbewegung vollzieht sich um die Anlenkachse 18 des Bodens.

Statt mit einem Zugseil 20 kann der Boden 14 auch mit einer Zug- oder Schubstange betätigt werden.

Die Seitenwände 16 haben eine abgeschrägte Vorderkante 26, mit der der obere Rand des hochgeklappten Bodens 14 zur Deckung kommt. Der Boden 14 ist sowohl in seiner Horizontalstellung, als auch in seiner Schrägstellung zwischen den Seitenwänden 14 aufgenommen. Er vollzieht seine Klappbewegung zwischen den Seitenwänden 16.

Zwischen der End- bzw. Trennwand 10, 12 und dem in Horizontalstellung befindlichen Boden 14 verbleibt ein Spalt 28. Dieser ist mindestens so breit, daß eine Henne beim Herabklappen des Bodens 14 ihren Hals herausziehen kann.

Wie man am besten in Fig. 4 erkennt, ist die Vorrichtung in beträchtlichem Abstand über dem Bodengitter 30 des Käfigs angeordnet. Die Legehennen können deshalb dem herabklappenden Boden 14 nach unten ausweichen.

Um trotz der hohen Anbringung eine gute Zugänglichkeit der Vorrichtung zu gewährleisten, ist mit vorstehenden Wangen 32 eine Anflugstange 34 an den Seitenwänden 16 angebracht. Die Anflugstange 34 kommt vor dem Boden 14 der Vorrichtung zu liegen.

Oberhalb des Bodens 14 erstreckt sich das Rohr 36 eines Schneckenförderers, der alle Vorrichtungen auf einer Etage der Gruppenlege-Anlage mit Einstreu versorgt. Die Einstreu fällt durch eine Dosieröffnung an der Unterseite des Rohrs 36 auf den Boden 14 herab.

Die Trogform des Bodens 14 ist so gewählt, daß er in seiner hochgeklappten Schrägstellung nur abfallende Flächen hat.

Unter dem Bodengitter 30 des Käfigs ist ein nicht näher dargestelltes Band für den Abtransport von Kot und anderem Abfall angeordnet.

Die Vorrichtung wird taktweise betrieben. Wenn sich der Boden 14 in Horizontalstellung befindet, kann er mit neuer Einstreu beschickt werden. Die Legehennen können sich auf den Boden 14 begeben und in der Einstreu picken und scharren.

Dies und die Möglichkeit einer Eiablage auf dem Boden 14 zu beenden, wird letzterer in seine Schrägstellung hochgeklappt. Die verbliebene Einstreu und eventuelle Verunreinigungen rutschen herab, fallen durch das Bodengitter 30 des Käfigs und werden mit dem darunter laufenden Band abtransportiert.

Dadurch, daß die Hennen an dem schräg stehenden Boden 14 weiter picken und kratzen, wird eine vollständige Selbstreinigung der Vorrichtung erreicht.

### Liste der Bezugszeichen

- 10: Endwand
- 12: Trennwand
- 14: Boden
- 16: Seitenwand
- 18: Anlenkachse
- 20: Zugseil
- 22: Rolle
- 24: Diagonalstrich
- 26: Vorderkante
- 28: Spalt
- 30: Bodengitter
- 32: Wange
- 34: Anflugstange
- 36: Rohr

## Patentansprüche

1. Vorrichtung zur Bereitstellung von Einstreu in einem ausgestalteten Käfig für die Haltung von Legehennen mit einem trogförmigen Boden (14), der zwischen Seitenwänden (16) maschinell verstellbar ist, so daß er wahlweise eine horizontale Beschickungs- und Nutzstellung oder eine hochgeklappte schräge Entleerungs- und Reinigungsstellung einnimmt, wobei die Trogform des Bodens (14) so gewählt ist, daß er in seiner hochgeklappten Schrägstellung abfallende Flächen hat.

2. Vorrichtung nach Anspruch 1, **dadurch gekennzeichnet, daß** der Boden (14) an den Seitenwänden (16) gelenkig gelagert ist.

3. Vorrichtung nach Anspruch 1 oder 2, **dadurch gekennzeichnet, daß** die Bodenfläche geschlossen ist.

4. Vorrichtung nach einem der Ansprüche 1 bis 3, **dadurch gekennzeichnet, daß** die Seitenwände (16) an einer Endwand (10) des Käfigs oder Trennwand (12) zwischen zwei Käfigen angebracht sind, **daß** sich die Gelenkachse (18) des Bodens (14) auf der der End- bzw. Trennwand (10, 12) abgewandten Seite des Bodens (14) befindet, und **daß** der Boden (14) nicht an die End- bzw. Trennwand (10, 12) heranreicht, so daß ein Spalt (28) zum Entweichen bleibt.

5. Vorrichtung nach einem der Ansprüche 1 bis 4, **dadurch gekennzeichnet, daß** die Seitenwände (16) lichtdurchlässig sind.

6. Vorrichtung nach einem der Ansprüche 1 bis 5, **dadurch gekennzeichnet, daß** die Seitenwände (16) aus Lochblech oder Drahtgeflecht bestehen.

7. Vorrichtung nach einem der Ansprüche 1 bis 6, **dadurch gekennzeichnet, daß** die Seitenwände (16) eine Auflage für den Boden (14) bilden.

8. Vorrichtung nach Anspruch 7, **dadurch gekennzeichnet, daß** die Seitenwände (16) abgewinkelt sind.

9. Vorrichtung nach einem der Ansprüche 1 bis 8, **dadurch gekennzeichnet, daß** die Verstellung des Bodens (14) zug- oder schubmittelbetätigt ist.

10. Vorrichtung nach einem der Ansprüche 1 bis 9, **dadurch gekennzeichnet, daß** sie mit Abstand oberhalb des Käfigbodens (30) angeordnet ist, und **daß** vor dem Boden (14) eine Anflugstange (34) fest montiert ist.

11. Vorrichtung nach einem der Ansprüche 1 bis 10, **dadurch gekennzeichnet, daß** sie mit Einstreu maschinell beschickbar ist.

12. Vorrichtung nach einem der Ansprüche 1 bis 11, **gekennzeichnet durch** einen Schnecken- oder Spiralenförderer für die Einstreu mit einer Dosieröffnung oberhalb des Bodens (14).

## Claims

1. Device for supplying litter in a configured cage for keeping laying hens, with a trough-shaped floor (14) which can be mechanically displaced between side walls (16), so that it takes up either a horizontal charging and working position or a raised inclined emptying and cleaning position, wherein the trough shape of the floor (14) is selected such that it has downward sloping surfaces in its raised inclined position.

2. Device according to Claim 1, **characterised in that** the floor (14) is hinge-mounted at the side walls (16).

3. Device according to Claim 1 or 2, **characterised in that** the floor surface is closed.

4. Device according to any one of Claims 1 to 3, **characterised in that** the side walls (16) are fastened to an end wall (10) of the cage or dividing wall (12) between two cages, **that** the hinge axis (18) of the floor (14) is located on the side of the floor (14) which is remote from the end or dividing wall (10, 12), and **that** the floor (14) does not reach up to the end or dividing wall (10, 12), so that a gap (28) remains for escape.

5. Device according to any one of Claims 1 to 4, **characterised in that** the side walls (16) are transparent.

6. Device according to any one of Claims 1 to 5, **characterised in that** the side walls (16) consist of perforated plate or wire netting.

7. Device according to any one of Claims 1 to 6, **characterised in that** the side walls (16) form a support for the floor (14).

8. Device according to Claim 7, **characterised in that** the side walls (16) are angled.

9. Device according to any one of Claims 1 to 8, **characterised in that** the displacement of the floor (14) is actuated by traction or thrust means.

10. Device according to any one of Claims 1 to 9, **characterised in that** it is disposed at a spacing above the cage floor (30), and **that** an approach rod (34) is firmly mounted in front of the floor (14).

11. Device according to any one of Claims 1 to 10, **characterised in that** it can be mechanically charged with litter.

12. Device according to any one of Claims 1 to 11, **characterised by** a worm or spiral conveyor for the litter with a metering opening above the floor (14).

## Revendications

1. Dispositif pour mise à disposition de litière dans une cage aménagée pour l'élevage de poules pondeuses, muni d'un fond en forme de mangeoire (14) qui est ajustable mécaniquement entre des parois latérales (16), de telle sorte qu'il adopte au choix une position horizontale d'alimentation et d'utilisation ou une position inclinée rabattue vers le haut de vidage et de nettoyage, la forme en tant que mangeoire du fond (14) étant choisie de telle manière qu'en position inclinée rabattue vers le haut, il présente des surfaces en pente.

2. Dispositif selon la revendication 1, **caractérisé en ce que** le fond (14) est monté de façon articulée sur les parois latérales (16).

3. Dispositif selon la revendication 1 ou 2, **caractérisé en ce que** la surface du fond est pleine.

4. Dispositif selon l'une des revendications 1 à 3, **caractérisé en ce que** les parois latérales (16) sont accolées à une paroi terminale (10) de la cage ou à une paroi de séparation (12) entre deux cages, **en ce que** l'axe d'articulation (18) du fond (14) se trouve sur le côté du fond (14) opposé à la paroi terminale ou de séparation (10, 12), et **en ce que** le fond (14) n'atteint pas la paroi terminale ou de séparation (10, 12), de telle sorte qu'il reste un intervalle (28) pour le dégagement.

5. Dispositif selon l'une des revendications 1 à 4, **caractérisé en ce que** les parois latérales (16) sont translucides.

6. Dispositif selon l'une des revendications 1 à 5, **caractérisé en ce que** les parois latérales (16) consistent en tôle perforée ou en treillis métallique.

7. Dispositif selon l'une des revendications 1 à 6, **caractérisé en ce que** les parois latérales (16) forment un appui pour le fond (14).

8. Dispositif selon la revendication 7, **caractérisé en ce que** les parois latérales (16) sont repliées.

9. Dispositif selon l'une des revendications 1 à 8, **caractérisé en ce que** le changement de position du fond (14) est actionné par un élément de traction ou de poussée.

10. Dispositif selon l'une des revendications 1 à 9, **caractérisé en ce qu'**il est disposé à distance au-dessus du fond de la cage (30) et **en ce qu'**un perchoir (34) est monté en avant du fond (14).

11. Dispositif selon l'une des revendications 1 à 10, **caractérisé en ce qu'**il peut être alimenté mécaniquement en litière.

12. Dispositif selon l'une des revendications 1 à 11, **caractérisé par** un mécanisme de transport à spirale ou à vis sans fin pour la litière, muni d'une ouverture de dosage au-dessus du fond (14).
